# EUROPEAN PATENT APPLICATION

(11) **EP 4 694 524 A1**
(43) Date of publication of application: **11.02.2026**
(21) Application number: 23929062.0
(22) Date of filing: 24.03.2023
(51) Int. Cl.: H04W 74/08

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2023/083717
(87) International publication number: WO 2024/197458

(57) **Abstract**

Embodiments of the present application provide a wireless communication method and device. The method is applicable to a first device. The method comprises: acquiring a first time domain resource by means of channel access, wherein the first time domain resource comprises a second time domain resource corresponding to a second device, and the second device is a device that is in communication with a third device by means of the first device. In the embodiments of the present application, a first time domain resource acquired by a first device by means of channel access comprises a second time domain resource corresponding to a second device, and the second device is a device that is in communication with a third device by means of the first device, that is, when in communication with the third device, on the one hand, the second device is in communication with the third device by means of the time domain resource acquired by the first device, and on the other hand, the second device is in communication with the third device by means of the first device in a relay mode, so that the second device is in communication with the third device on an unlicensed spectrum, and conflicts and interference with other devices are reduced.

## Description

### TECHNICAL FIELD

Embodiments of the present disclosure relate to the technical field of communications, and in particular, relate to a method and device for wireless communication.

### RELATED ART

With low complexity and cost, zero-power devices enable maintenance-free and battery-less operation. Supporting energy harvesting and/or backscatter communication, the zero-power devices facilitate cost-effective, high-density, and large-scale deployments. The use of unlicensed frequency bands also constitutes a key deployment scenario within cellular communication systems. Nevertheless, due to the lack of channel access capability in the zero-power devices, a pressing technical problem to be addressed in the art is how such devices achieve communication in the unlicensed spectrum while mitigating conflicts and interference with other devices.

### SUMMARY

Embodiments of the present disclosure provide a method and device for wireless communication, which is appliable to achieving communications with other terminals on the unlicensed spectrum and achieving reduced collisions and interference with other devices.

In a first aspect, the embodiments of the present disclosure provide a method for wireless communication. The method is performed by a first device, and includes: acquiring a first time-domain resource via channel access, wherein the first time-domain resource includes a second time-domain resource corresponding to a second device, wherein the second device is in communication with a third device via the first device.

In a second aspect, the embodiments of the present disclosure provide a method for wireless communication. The method is performed by a second device, and includes: communicating with a third device via a first device, wherein first time-domain resource acquired by the first device via channel access includes a second time-domain resource corresponding to the second device.

In a third aspect, the embodiments of the present disclosure provide a method for wireless communication. The method is performed by a third device, and includes: communicating with a second device via a first device, wherein first time-domain resource acquired by the first device via channel access includes a second time-domain resource corresponding to the second device.

In a fourth aspect, the embodiments of the present disclosure provide a first device. The first device is applicable to implementing the method in the first aspect or embodiments thereof. Specifically, the first device includes functional modules for performing the method in the first aspect or embodiments thereof.

In some embodiments, the first device includes a processing unit, configured to implement functions associated with information processing. For example, the processing unit is a processor.

In some embodiments, the first device includes a transmitting unit and/or a receiving unit. The transmitting unit is configured to implement functions associated with transmission, and the receiving unit is configured to implement functions associated with reception. For example, the transmitting unit is a transmitter, and the receiving unit is a receiver. For example, the second device is a communication chip, the transmitting unit is an input circuit or an interface of the communication chip, and the transmitting unit is an output circuit or an interface of the communication chip.

In a fifth aspect, the embodiments of the present disclosure provide a second device. The second device is applicable to implementing the method in the second aspect or embodiments thereof. Specifically, the second device includes functional modules for performing the method in the second aspect or embodiments thereof.

In some embodiments, the second device includes a processing unit, configured to implement functions associated with information processing. For example, the processing unit is a processor.

In some embodiments, the second device includes a transmitting unit and/or a receiving unit. The transmitting unit is configured to implement functions associated with transmission, and the receiving unit is configured to implement functions associated with reception. For example, the transmitting unit is a transmitter, and the receiving unit is a receiver. For example, the second device is a communication chip, the receiving unit is an input circuit or an interface of the communication chip, and the transmitting unit is an output circuit or an interface of the communication chip.

In a sixth aspect, the embodiments of the present disclosure provide a third device. The third device is applicable to implementing the method in the second aspect or embodiments thereof. Specifically, the third device includes functional modules for performing the method in the second aspect or embodiments thereof.

In some embodiments, the third device includes a processing unit, configured to implement functions associated with information processing. For example, the processing unit is a processor.

In some embodiments, the third device includes a transmitting unit and/or a receiving unit. The transmitting unit is configured to implement functions associated with transmission, and the receiving unit is configured to implement functions associated with reception. For example, the transmitting unit is a transmitter, and the receiving unit is a receiver. For example, the second device is a communication chip, the receiving unit is an input circuit or an interface of the communication chip, and the transmitting unit is an output circuit or an interface of the communication chip.

In a seventh aspect, the embodiments of the present disclosure provide a first device. The first device includes a processor, a memory, and a transceiver. The memory is configured to store one or more computer programs; wherein the processor is configured to call and run the one or more computer programs in the memory to cause the transceiver to perform the method in the first aspect or embodiments thereof.

In some embodiments, one or more processors are configured, and one or more memories are configured.

In some embodiments, the memory may be integrated with the processor, or may be arranged separately from the processor.

In some embodiments, the first device further includes a transceiver and a receiver.

In an eighth aspect, the embodiments of the present disclosure provide a second device. The second device includes a processor, a memory, and a transceiver. The memory is configured to store one or more computer programs; wherein the processor is configured to call and run the one or more computer programs in the memory to cause the transceiver to perform the method in the second aspect or embodiments thereof.

In some embodiments, one or more processors are configured, and one or more memories are configured.

In some embodiments, the memory may be integrated with the processor, or may be arranged separately from the processor.

In some embodiments, the second device further includes a transceiver and a receiver.

In a ninth aspect, the embodiments of the present disclosure provide a third device. The third device includes a processor, a memory, and a transceiver. The memory is configured to store one or more computer programs; wherein the processor is configured to call and run the one or more computer programs in the memory to cause the transceiver to perform the method in the second aspect or embodiments thereof.

In some embodiments, one or more processors are configured, and one or more memories are configured.

In some embodiments, the memory may be integrated with the processor, or may be arranged separately from the processor.

In some embodiments, the third device further includes a transceiver and a receiver.

In a tenth aspect, the embodiments of the present disclosure provide a chip. The chip is configured to implement the method in the first aspect to the third aspect or embodiments thereof. Specifically, the chip includes a processor, wherein the processor is configured to call and run one or more computer programs in a memory to cause a device equipped with the chip to perform the method in the first aspect to the third aspect or embodiments thereof.

In an eleventh aspect, the embodiments of the present disclosure provide a computer-readable storage medium. The computer-readable storage medium stores one or more computer programs, wherein the one or more computer programs, when loaded and run on a computer, cause the computer to perform the method in the first aspect to the third aspect or embodiments thereof.

In a twelfth aspect, the embodiments of the present disclosure provide a computer program product. The computer program product includes one or more computer program instructions, wherein the one or more computer program instructions, when loaded and executed on a computer, cause the computer to perform the method in the first aspect to the third aspect or embodiments thereof.

In a thirteenth aspect, the embodiments of the present disclosure provide a computer program. The computer program, when loaded and run on a computer, causes the computer to perform the method in the first aspect to the third aspect or embodiments thereof.

Based on the above technical solutions, the first time-domain resource acquired by the first device via channel access includes the second time-domain resource corresponding to the second device, and the second device is in communication with the third device via the first device. That is, the second device is in communication with the third device via the time-domain resource acquired by the first device and via a relay mode by the first device, such that communications between the second device and the third device are achieved on the unlicensed spectrum, and the collisions and interference with other devices are reduced.

### BRIEF DESCRIPTION OF DRAWINGS

FIG. 1 is a schematic diagram of a communication system according to some embodiments of the present disclosure;
FIG. 2 is an exemplary diagram of a physical layer protocol data unit (PPDU) according to some embodiments of the present disclosure;
FIG. 3 is an exemplary diagram of a frame format of a medium access control (MAC) frame according to some embodiments of the present disclosure;
FIG. 4 is an exemplary diagram of a relay communication according to some embodiments of the present disclosure;
FIG. 5 is a schematic flowchart of a method for wireless communication according to some embodiments of the present disclosure;
FIG. 6 is a schematic diagram of a relationship between a first device, a second device, and a third device according to some embodiments of the present disclosure;
FIG. 7 is an exemplary diagram of a channel access process according to some embodiments of the present disclosure;
FIG. 8 is an exemplary diagram of a channel access process according to some embodiments of the present disclosure;
FIG. 9 is an exemplary diagram of a first signal according to some embodiments of the present disclosure;
FIG. 10 is an exemplary diagram of transmission of a request-to-send (RTS) by a first device according to some embodiments of the present disclosure;
FIG. 11 is an exemplary diagram of transmission of an RTS by a first device according to some embodiments of the present disclosure;
FIG. 12 is an exemplary diagram of a null data PPDU (NDP) carrying medium access control information (CMAC) frame according to some embodiments of the present disclosure;
FIG. 13 is an exemplary diagram of a SIGNAL field in an NDP CMAC frame according to some embodiments of the present disclosure;
FIG. 14 is a schematic block diagram of a first device according to some embodiments of the present disclosure;
FIG. 15 is a schematic block diagram of a second device according to some embodiments of the present disclosure;
FIG. 16 is a schematic block diagram of a third device according to some embodiments of the present disclosure;
FIG. 17 is a schematic block diagram of a fourth device according to some embodiments of the present disclosure; and
FIG. 18 is a schematic block diagram of a chip according to some embodiments of the present disclosure.

### DETAILED DESCRIPTION

The technical solutions according to the embodiments of the present disclosure are described hereinafter in combination with the accompanying drawings for the embodiments of the present disclosure.

The embodiments of the present disclosure are applicable to various communication systems, including but not limited to a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, an universal mobile telecommunication system (UMTS), a wireless local area network (WLAN), a wireless fidelity (Wi-Fi), a next generation communication system, a zero-power communication system, a cellular Internet of things (IoT) system, a cellular passive IoT system, or other communication systems.

The cellular IoT is acquired by combining a cellular mobile communication network and an IoT, and is also referred to as a passive cellular IoT that is combined by a network device and a passive terminal. In the passive cellular IoT, a passive terminal is in communication with other passive terminals via a network device or via a device-to-device (D2D) communication mode, and the network device only transmits carrier signals (that is, power signals) to power the passive terminal.

In general, the traditional communication systems support a limited number of connections and is relatively easy to implement. However, with the development of the communication technologies, the mobile communication systems not only support traditional communications, but also support, for example, D2D communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

It should be understood that the communication systems according to the embodiments of the present disclosure are also applicable to a carrier aggregation (CA) scenario, a dual connectivity (DC) scenario, or a standalone (SA) scenario. The embodiments of the present disclosure do not limit the applied spectrum. For example, the embodiments of the present disclosure are applicable to a licensed spectrum or an unlicensed spectrum.

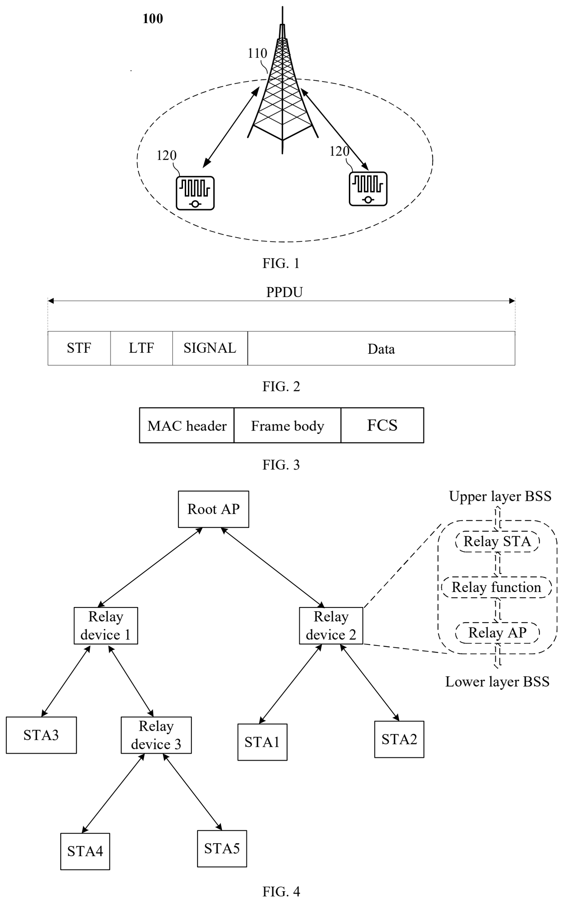

FIG. 1 is a schematic diagram of a communication system 100 according to some embodiments of the present disclosure.

As illustrated in FIG. 1, the communication system 100 includes a network device 110. The network device 110 is a device capable of communicating with a terminal device 120 (also referred to as a communication terminal or a terminal). The network device 110 provides communication coverage for a specific geographical area, and is capable of communicating with the terminal device in the coverage area.

Illustratively, the network device 110 is a device for communicating with the mobile device, and the network device 110 is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, or a network device in an NR network (gNB) or in a future evolutional PLMN network.

The network device 110 provides services for cells, and the terminal device 120 communicates with the network device via the transmission resources (such as frequency-domain resources, or spectrum resources) used in the cells. The cell corresponds to the network device (such as the NB), and the cell belongs to a macro NB or an NB corresponding to a small cell. The small cell includes a metro cell, a micro cell, a pico cell, a femto cell, or the like. The small cells have small coverage and low transmit power, and are suitable for providing high-speed data transmission services.

Illustratively, the terminal device 120 is also referred to as a user equipment (UE), an access terminal, a subscriber unit, a subscriber station, a rover station, a mobile station, a remote station, a remote terminal, a mobile device, a subscriber terminal, a terminal, a wireless communication device, a user agent, or a user apparatus. In some embodiments, the station is a station (STA) in WLAN, a cellular phone, a cordless phone, a Session Initiation Protocol (SIP) phone, a wireless local loop (WLL) station, a personal digital assistant (PDA) device, a handheld device with a wireless communication function, a computing device or another processing device connected to a wireless modem, an in-vehicle device, a wearable device or a next generation communication system, for example, a terminal device in the NR network, a terminal device in an evolved public land mobile network (PLMN) network, or a zero-power device.

For example, the terminal device 120 is a wearable device. The wearable device is also referred to as a wearable smart device, which is a generic name for wearable devices (for example, glasses, gloves, watches, clothes, and shoes) that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

For example, the terminal device 120 is a zero-power device. The zero-power device has a power consumption less than a predetermined power consumption. For example, the zero-power device includes a passive terminal or even a half-passive terminal.

It should be understood that FIG. 1 is an example of the present disclosure, which is not intended to limit the present disclosure.

For example, in some embodiments, the communication system 100 includes a plurality of network devices, and a coverage range of each of the network devices includes terminal devices in another quantity. For example, in the embodiments of the present disclosure, devices with a communication function in the network/system are also referred to as communication devices. Using the communication system 100 illustrated in FIG. 1 as an example, the communication device includes a network device 110 and a terminal device 120 with the communication function, and the network device 110 and the terminal device 120 are specific devices as described above, which are not repeated herein any further. The communication system 100 further includes other communication devices, such as a network controller, a mobility management entity, and other network entities, which are not limited in the embodiments of the present disclosure.

In addition, it should be understood that the terms "system" and "network" herein are interchangeably used herein. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects. The term "corresponding" mean that there is a direct correspondence relationship or indirect correspondence relationship between two objects, an association relationship between two objects, a relationship of indicating or being indicated, or a relationship of configuring and being configured. The term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated. The term "predefined" is achieved by pre-storing corresponding codes or forms in the device (for example, including the terminal device and the network device) or other means for indicating relevant information, and the specific implementations are not limited in the present disclosure. For example, the predefinition is defined in the protocol. It should be further understood that in the embodiments of the present disclosure, the term "protocol" indicates a standard protocol in the field of communications, for example, an LTE protocol, an NR protocol, or a related protocol applied to the future communication system, which is not limited in the present disclosure.

For better understanding of the technical solutions according to the embodiments of the present disclosure, the zero-power device and related technologies in the present disclosure are described.

### (1) Classification of zero-power terminals

Based on energy sources and usage modes of zero-power terminals, the zero-power terminals are classified into the following types:

### 1. Passive zero-power terminal

The zero-power device does not need a built-in battery. In a case where the zero-power device approaches the network device (for example, a reader/writer in an RFID system), the zero-power device is within a near-field range formed by antenna radiation from the network device. Therefore, the antenna of the zero-power device generates an induced current based on electromagnetic induction, and the induced current drives a low-power chip circuit of the zero-power device, such that signal demodulation on a forward link and signal modulation on a reverse link (or referred to as a reflection link) are achieved. For the backscatter link, the zero-power device transmits signals in the backscatter mode.

It can be seen that the passive zero-power device does not need the built-in battery to drive the forward link or the reverse link, and thus is a true zero-power device.

The passive zero-power device does not need a battery, and an RF circuit and a baseband circuit are very simple. For example, the RF circuit and the baseband circuit do not need devices such as a low-noise amplifier (LNA), a PA, a crystal oscillator, and an analog-to-digital converter (ADC). Therefore, the passive zero-power device has many merits, for example, small size, light weight, low price, and long service life.

The passive zero-power terminal supports other energy harvesting modes, and harvests energy from the environment (for example, luminous energy, thermal energy, kinetic energy, and mechanical energy) to acquire energy for driving the circuit and support communication with the terminal device.

### 2. Half-passive zero-power terminal

The half-passive zero-power device does not need a conventional battery, but harvests radio wave energy or the energy in the environment (for example, solar energy, thermal energy, and mechanical vibration energy) using an RF energy harvesting module, and stores the harvested energy in an energy storage unit (such as a capacitor). Upon acquiring the energy, the energy storage unit drives the low-power chip circuit of the zero-power device, such that signals on the forward link are demodulated, and signals on the reverse link are modulated. For the backscatter link, the zero-power device transmits the signals in the backscatter mode.

It can be seen that the half-passive zero-power device does not need the built-in battery to drive the forward link or the reverse link. Although the energy stored in the capacitor is used in operation, the energy comes from the radio energy harvested by the energy harvesting module, and thus the half-passive zero-power device is also a true zero-power device.

The half-passive zero-power device inherits many advantages of the passive zero-power device, and thus has many merits, for example, small size, light weight, low price, and long service life.

### 3) Active zero-power terminal

In some scenarios, the used zero-power device is also an active zero-power device, and the terminal is equipped with a built-in battery (a conventional battery, for example, a dry battery, or a rechargeable lithium battery. The battery is used to drive the low-power chip circuit of the zero-power device, and signals on the forward link are demodulated and signals on the reverse link are modulated. For the backscatter link, the zero-power device transmits the signals in the backscatter mode. Therefore, zero-power of the terminal means that signal transmission on the reverse link does not need power from the terminal but relies on backscattering. Although the active zero-power device uses the battery, the power consumption is low owing to the sampling ultra-low power communication technology. Therefore, compared to the related art, the service life of the battery is prolonged.

The active zero-power device is equipped with a built-in battery to power the RFID chip, such that a read and write range of a tag is extended, and the communication reliability is improved. Therefore, the active zero-power device has been applied in some scenarios where stringent requirements for communication distance, read delay, and the like are imposed.

It should be noted that some zero-power terminals, for example, the half-passive zero-power terminal or the active zero-power terminal, also have the actively transmission capability. That is, the reverse link is in communication with other links in the backscattering mode and the active transmission mode.

### (2) Cellular passive IoT

With extended application of 5G, types of connected objects and application scenarios thereof are increasing, and thus more stringent requirements are imposed on the price and power consumption of the communication terminal, the application of battery-free and low-cost passive IoT devices has become a key technology for cellular IoT, the types and numbers of terminals connected in 5G networks are enriched, and the interconnection of all things is truly achieved. The passive IoT device is designed and extended based on existing zero-power devices to be applicable to cellular IoT.

### (3) Environmental-energy-based devices

In the NR system and the Wi-Fi system, the battery-free and low-cost features of the devices support the low-cost large-scale deployment and free maintenance of IoT devices. The NR system and the Wi-Fi system support environmental-energy-based IoT devices, which is also referred to as ambient IoT or ambient powered (AMP) IoT devices. The ambient IoT refers to an IoT device that uses various ambient energy sources, for example, radio frequency energy, luminous energy, solar energy, thermal energy, mechanical energy, and other ambient energy. The ambient IoT device does not have the energy storage capability or has a limited energy storage capability (for example, using a capacitor with a capacity of several tens of microfarads (uF)). Such devices are similar to the passive device or the half-passive device in the zero-power communication.

### (4) PPDUs in Wi-Fi technologies

Information in the Wi-Fi device is transmitted based on a PPDU frame.

FIG. 2 is an exemplary diagram of a PPDU according to some embodiments of the present disclosure.

As illustrated in FIG. 2, the PPDU frame includes a physical layer header and a data portion. The physical layer header includes three portions, that is, a Short Training field (STF), a Long Training field (LTF), and some specific settings for the data portion, which are named as SIGNAL portion. The STF mainly includes 10 short symbols (t1-t10), and each symbol is 0.8 µs, includes many functions, and mainly achieves frame synchronization and coarse frequency synchronization. t1-t7 mainly have a signal detection function, an automatic gain control (AGC) function, a diversity selection function, and the like. t8-t10 mainly have a coarse frequency function, a offset estimation function, a timing synchronization function, and the like. The LTF achieves fine frequency synchronization and channel estimation. The SIGNAL portion carries information related to the data portion, including data transmission rate, data packet length information, reserved bits, tail bits, and the like.

The data portion of the PPDU carries a MAC frame.

FIG. 3 is an exemplary diagram of a frame format of a MAC frame according to some embodiments of the present disclosure.

As illustrated in FIG. 3, the frame format of the MAC frame includes a MAC header, a frame body, and a frame check sequence (FCS).

### (5) Unlicensed spectrum

The unlicensed spectrum refers to a spectrum (including specific frequency bands) allocated by some countries or regions (national or regional authorities) for the communication of radio devices, and is usually regarded as a shared spectrum. That is, communication devices in different communication systems use the spectrum as long as these communication devices meet the regulations stipulated by the country or region on the spectrum, without need to request an exclusive spectrum grant from the government. Some countries or regions have stipulated the regulatory requirements that shall be satisfied or observed for using the unlicensed spectrum to ensure that various communication systems using the unlicensed spectrum for wireless communication coexist peacefully on the spectrum. For example, in the European, communication devices follow a "listen-before-talk" (LBT) mechanism. That is, the communication device needs to monitor the channel before transmitting signals on the channel of the unlicensed spectrum, and the communication device transmit signals only in a case where the channel monitoring result is idle; and in a case where the channel monitoring result of the communication device on the channel of the unlicensed spectrum is busy or occupied, the communication device may not transmit signals. Moreover, a duration where the communication device uses the channel of the unlicensed spectrum for signal transmission does not exceed a maximum channel occupancy time (MCOT) in one transmission to ensure fairness.

The user-standardized unlicensed spectrum is used in the cellular communication system. For example, unlicensed frequency bands below 7 GHz are used in the NR-U technology in 3GPP Rel-16, and unlicensed spectrum in higher frequency bands (for example, the 52.6 GHz-71 GHz in Rel-17 standard) may be used in subsequent technology evolution and related technologies. Widely used Wi-Fi technologies are also communication technologies that use unlicensed frequency bands.

### (6) Channel access mechanism

A basic channel access protocol is a distributed coordination function (DCF) in the 802.11 protocol, in which different compatible station (STA) devices share and use the channel based on a carrier sense multiple access with collision avoidance (CSMA/CA) mechanism to reduce the probability of collisions.

The DCF includes four core mechanisms.

### 1. Carrier sensing mechanism

The carrier sensing mechanism includes physical carrier sensing and virtual carrier sensing. The channel is busy in a case where any sensing result indicates the channel being busy.

The physical carrier sensing uses three types of channel idle detection modes, that is, energy detection, carrier detection, and energy-carrier hybrid detection, which are collectively referred to as CCA. The energy detection is to evaluate an energy level of the received signal. In a case where a receive power is greater than a threshold specified for the physical layer (ED_threshold), the channel is occupied. The carrier detection is to detect a preamble portion of a signal in the channel and determine whether the channel is occupied based on a detection result.

The virtual carrier sensing mechanism is provided by a MAC layer. In the 802.11 standard, a network allocation vector (NAV) is used to implement virtual sensing. A Dur/ID field in the MAC frame stores a "duration." For the STA that receives the information, A duration in which the channel is to be occupied and a latency for transmission of the STA are determined. The NAV is a timer configured to define a duration in which the current channel needs to be occupied. An initial value is a duration of a last received frame, and counts down to 0 to terminate. Each sensing STA uses the NAV timer. In data communication, the STA reserving the channel informs other STAs a required duration via the Duration field in the frame, and the STA that has not gain the channel updates the NAV value by comparing a duration value in the received packet. in a case where the NAV value is 0, and the physical carrier sensing indicates that the channel is idle, the current channel is in an idle state.

### 2. Interframe space (IFS) mechanism

For avoidance of collisions, the 802.11 standard stipulates that a next frame is transmitted subsequent to a very short time (to continue sensing) in a case where all stations are transmitted. The time is commonly referred to as an IFS. A length of the IFS depends on a type of a frame to be transmitted by the station. A frame with a higher priority requires a shorter queue time and thus is preferentially granted a transmission permission, but a frame with a lower priority needs to wait for a longer time. In a case where the frame with the lower priority is not transmitted before transmission of the frame with the higher priority to the medium, the medium becomes busy and thus transmission of the frame with the lower priority is postponed, such that the collisions are reduced.

The IFS provides a way to designate different priorities for the access to the wireless medium. Different priorities are specified based on the length of IFS. The shorter the time, the higher the corresponding priority. The IFSs are shown in an ascending order in terms of length as follows.

### 1. Short interframe space (SIFS)

The SIFS is the shortest time range, and is used to space a frame that needs to be responded immediately, for example, a control frame (RTS/CTS/ACK). The shortest space is used between two consecutive transmissions of frame exchange to prevent other stations waiting for the medium from attempting to use the medium.

### 2. Point coordination function interframe space (PIFS)

The PIFS is only used by a station operating in a point coordination function (PCF) mode.

### 3. Distributed coordination function interframe space (DIFS)

The DIFS is only used by a station operating in a distributed coordination function (DCF) mode.
4. Extended interframe space (EIFS): In a case where a previous frame is error, a transmitter node has to postpone the EIFS rather than the DIFS before transmitting a next frame.

### 3. Random backoff mechanism

In 802.11, a binary exponential backoff mode is used to process a required backoff time of a node in transmission failure or collisions. In a case where a MAC layer has a frame to be transmitted, the physical carrier sensing and the virtual carrier sensing indicate that the channel is idle, a counter value is continuously reduced in units of slot in a case where the counter value of the backoff window is not zero. Otherwise, a backoff window is randomly generated for backoff. The node selects a random value from the contention window as a reference random backoff counter value. Upon determination of the backoff time, a backoff timer is set. A value in the contention window is a parameter value between a minimum contention window (CWmin) and a maximum contention window (CWmax) of the physical features, and is used to select a range of the random backoff counter value for the node. The station continuously senses the channel within the slot. In a case where the channel is idle, the backoff timer continues to count down by 1; in a case where the channel is busy or occupied, the remaining time of the backoff timer is frozen, and the node waits for the channel to be idle after a DIFS and then continues to count down from the remaining time. Upon reduction of the time of the backoff timer to zero, the entire data frame starts to be transmitted.

### 4. Request-to-send/clear-to-send (RTS/CTS) handshake mechanism

IEEE 802.11 RTS/CTS is the RTS/CTS protocol, and is a mechanism used by the 802.11 protocol to reduce collisions caused by hidden nodes. The basic idea of the RTS/CTS mechanism is to reserve the channel via short control packets. In a case where the transmitter station wants to transmit a message to the receiver station, the transmitter station needs to transmit an RTS control frame. Upon receiving the RTS, stations around the transmitter station set the NAV values therefor based on the Duration field. Upon receiving the RTS, the receiver station replies with the CTS control frame. Upon receiving the CTS, stations around the receiver station set the NAV values therefor based on the Duration field. Stations with a non-zero NAV value fail to sense the idle channel to avoid transmission collisions between the stations, and between the transmitter station and the receiver station.

### (7) Relay

802.11ah mainly supports IoT devices, and for this purpose, the AP is required to have a coverage of 1 km. In some IoT scenarios, a wide coverage is required. 802.11ah supports relay functionality to extend the coverage range. In 802.11ah, the relay is a functional entity, and logically includes functionalities of the relay AP and the relay STA. The relay device is connected downward to the STA and mainly acts as an AP; and the relay device is connected upward to the AP and acts as a terminal node. The relay device achieves a wider AP coverage by forwarding data packets.

FIG. 4 is an exemplary diagram of a relay communication according to some embodiments of the present disclosure.

As illustrated in FIG. 4, the relay device is configured to relay the communication between the relay AP and the STA. For example, relay device 2 is connected downward to STA 1 and STA 2 and mainly acts as an AP; and relay device 2 is connected upward to a root AP and acts as a terminal node. The relay device is further used to relay the communication between the AP and other relay devices (or STAs). Relay device 1 is connected downward to STA 3 and mainly acts as an AP; and relay device 1 is connected upward to a root AP and acts as a terminal node. The relay device is further in communication with the STA via the relay device. For example, relay device 3 is connected downward to STA 4 and STA 5 and mainly acts as an AP; and relay device 3 is connected upward to relay device 1 and acts as a terminal node.

Based on above description, with low complexity and cost, the low-power devices enable maintenance-free and battery-less operation. Supporting energy harvesting and/or backscatter communication, the low-power devices facilitate cost-effective, high-density, and large-scale deployments. The use of unlicensed frequency bands also constitutes a key deployment scenario within cellular communication systems.

Due to the power consumption limitation of the zero-power terminal, the zero-power terminal imposes a low complexity requirement. For example, the receiver only supports simple modulation and demodulation modes, for example, ASK, FSK, but does not support orthogonal frequency division multiplexing (OFDM). However, for the unlicensed spectrum, the zero-power terminal needs to perform corresponding CCA to determine whether the channel is idle in a case where the zero-power terminal needs to reserve the channel for data transmission, to ensure the fairness of channel usage. Meanwhile, the zero-power terminal needs to support the CSMA/CA mechanism to be compatible and coexist with existing devices. Using the Wi-Fi system as an example, the channel reservation by the zero-power terminal needs to support the DCF protocol, which requires the zero-power terminal to detect the conventional PPDU frames transmitted based on the OFDM, to satisfy the physical and the virtual carrier sensing. In addition, the channel reservation by the zero-power terminal needs to support the RTS/CTS mechanism, which is impossible for the zero-power terminal. Thus, the present disclosure provides a method for wireless communication, which ensures communication between the zero-power terminal and existing devices by sharing the channel, such that collisions and interference are reduced.

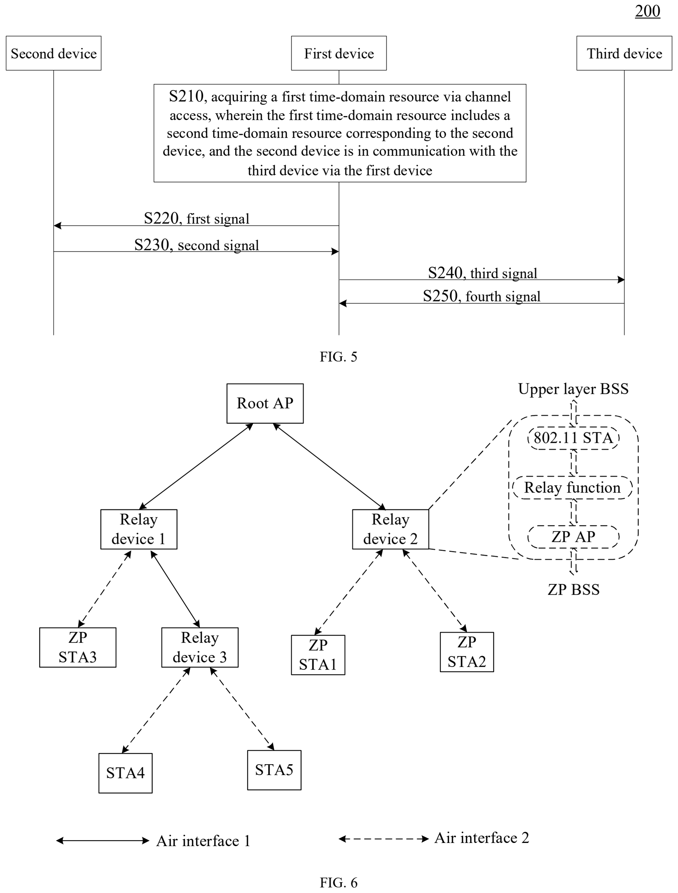

FIG. 5 is a schematic flowchart of a method 200 for wireless communication according to some embodiments of the present disclosure. The method 200 for wireless communication is performed by interaction between a first device, a second device, and a third device.

As illustrated in FIG. 5, the method 200 includes the following processes.

In S210, the first device acquires a first time-domain resource via channel access.

The first time-domain resource includes a second time-domain resource corresponding to the second device. The second device is in communication with the third device via the first device.

That is, the second device achieves communication between the second device and the third device via the first device. The first device is any device having relay functionality (that is, having functions of the relay AP and the relay STA), for example, includes, but is not limited to, an AP device or STA IN Wi-Fi system, an NB or UE in a cellular system, a power supply device, and a control node in a communication network.

In some embodiments, the second time-domain resource includes at least one of: a transmission opportunity (TXOP), a target wake time (TWT), a service period (SP), a restricted access window (RAW), or a duration in a RAW.

Illustratively, the second time-domain resource is a resource of the second device for transmitting and/or receiving information.

In the embodiments, the first time-domain resource acquired by the first device via channel access includes the second time-domain resource corresponding to the second device, and the second device is in communication with the third device via the first device. That is, in a case where the second device is in communication with the third device via the time-domain resource acquired by the first device and via a relay mode by the first device, such that communications between the second device and the third device are achieved on the unlicensed spectrum, and the collisions and interference with other devices are reduced.

In some embodiments, in a case where the second device is a device not having a channel access capability, the first time-domain resource includes the second time-domain resource.

In the embodiments, the first device performs channel reservation for the second device not having the channel access capability, such that the second device gains the TXOP or the channel occupancy time.

In some embodiments, the device not having the channel access capability includes a zero-power device.

In terms of the powering mode, the zero-power devices include ambient-energy-based devices (for example, AMP IoT or ambient IoT devices), battery-free terminals, maintenance-free terminals, and the like. the AMP IoT refers to IoT devices that use various ambient energy sources, for example, the radio frequency energy, the luminous energy, the solar energy, the thermal energy, the mechanical energy, and other ambient energy. The ambient IoT device does not have the energy storage capability or has a limited energy storage capability (for example, using a capacitor with a capacity of several tens of uF). The zero-power device acts as a communication terminal in a Wi-Fi or cellular network.

In the embodiments, the first device performs channel reservation for the zero-power device not having the channel access capability, such that the zero-power device gains the TXOP or the channel occupancy time. The method ensures the compatibility of channel access mechanisms of the zero-power device and the conventional device, and the wireless communication of the zero-power terminals on the unlicensed spectrum is achieved. Meanwhile, in a case where the third device acts as an AP, as the first device provides the relay function for the communication between the AP and the zero-power device, the coverage of the AP is enhanced, the impact on the conventional AP is reduced, and the communication between the AP and the zero-power device is supported by a software upgrade without support of the AP for a new physical layer air interface, such that the deployment cost is low, and the compatibility with the conventional system is ensured.

In some embodiments, in a case where the second device is associated with the first device, the first time-domain resource includes the second time-domain resource.

Illustratively, the second device is associated with the first device. That is, the second device is connected upward to the first device, or, the first device is connected downward to the second device.

In some embodiments, the first device is connected downward to another device. For example, the first device is connected downward to a device of the same type or different types with the second device, which is not limited in the present disclosure.

In some embodiments, the first device is associated with the third device.

Illustratively, the first device is associated with the third device. That is, the first device is connected upward to the third device, or, the third device is connected downward to the first device.

In some embodiments, the third device is connected downward to another device. For example, the third device is connected downward to a device of the same type or different types with the first device, which is not limited in the present disclosure.

In some embodiments, in a case where the second device is a sub-node device of the first device, the first time-domain resource includes the second time-domain resource.

Illustratively, in a case where the second device is the sub-node device of the first device, the first device is also referred to as a parent-node device of the second device.

In some embodiments, the sub-node device is at least one of: a device in a basic service set (BSS) provided by the first device, or a device associated with the first device.

Illustratively, in a case where the BSS provided by the first device is associated with and includes the second device, the second device is associated with the first device. That is, in a case where the second device is associated with the first device, the BSS provided by the first device is associated with and includes the second device.

Illustratively, in a case where the BSS provided by the first device is associated with and includes the second device, the first time-domain resource includes the second time-domain resource. That is, in a case where the second device is associated with the first device, the first time-domain resource includes the second time-domain resource.

It should be noted that the BSS is a basic service unit of the wireless network and the basic structure of the 802.11 network due to the shared nature of the wireless medium. The BSS provided by the first device may be understood as a service set composed of a plurality of devices (for example, STAs) associated with the first device. Within the BSS provided by the first device, a plurality of devices associated with the first device are connected upward to the first device and are in communication with or access other devices via the first device.

In some embodiments, the first device includes a first physical layer air interface and a second physical layer air interface. The first device is in communication with the second device via the first physical layer air interface, and the first device is in communication with the third device via the second physical layer air interface.

Illustratively, the first physical layer air interface is a physical layer air interface associated with the zero-power communication. For example, the first physical layer air interface is modulated in a simple modulation and demodulation mode (for example, ASK, FSK, and the like), is encoded in a simple coding mode (for example, repetition coding, Manchester coding, block coding, packet coding, and the like).

Illustratively, the second physical layer air interface is a physical layer air interface associated with the AP or STA communication. For example, the second physical layer air interface is modulated in an OFDM modulation mode, and is encoded by FEC encoding.

Illustratively, the second device is the zero-power device, and the third device is an AP, a STA, or other relay nodes. That is, the first device is in communication with the zero-power device via the first physical layer air interface, and the first device is in communication with the AP, the STA, or other relay nodes via the second physical layer air interface.

FIG. 6 is a schematic diagram of a relationship between a first device, a second device, and a third device according to some embodiments of the present disclosure.

As illustrated in FIG. 6, the relay device is used to relay the communication between the relay AP and the STA. For example, relay device 2 is connected downward to STA 1 and STA 2 and mainly acts as an AP; and relay device 2 is connected upward to a root AP and acts as a terminal node. The relay device is further used to relay the communication between the AP and other relay devices (or STAs). Relay device 1 is connected downward to STA 3 and mainly acts as an AP; and relay device 1 is connected upward to a root AP and acts as a terminal node. The relay device is further in communication with the STA via the relay device. For example, relay device 3 is connected downward to STA 4 and STA 5 and mainly acts as an AP; and relay device 3 is connected upward to relay device 1 and acts as a terminal node.

In conjunction with the solutions in the present disclosure, in a case where the first device is relay device 2, the second device is ZP STA 1 or ZP STA 2, and the third device is the root AP; in a case where the first device is relay device 1, the second device is ZP STA 3 or relay device 3, and the third device is the root AP; in a case where the first device is relay device 3, the second device is STA 4 or STA 5, and the third device is relay device 1. The first physical layer air interface between the first device and the second device is interface 2 shown in the drawing, and the second physical layer air interface between the first device and the third device is interface 1 shown in the drawing.

In some embodiments, S210 includes:
determining a first parameter set used in accessing the channel by the first device; and
acquiring the first time-domain resource via the channel access based on the first parameter set.

As the zero-power terminal does not support the existing channel access mechanism, data transmission over the channel requires a relay device in the service. That is, the first device gains the TXOP for the zero-power terminal by accessing the channel. Therefore, in addition to the relay functionality, an important function of the first device is to acquire, protect, and allocate the TXOP for the zero-power terminal. Thus, similar to the 802.11 STA, the first device accesses the channel in the conventional mode (for example, the CSMA/CA mechanism specified in the 802.11 standard), and is compatible with the conventional 802.11 device. Thus, in the BSS, similar to the STA, the first device belongs to the BSS provided by the third device, and the communication mode of the first device in the BSS is the same as the communication mode of the AP and other STAs. However, the first device accesses the channel access to gain the TXOP for the transmission of the first device and to gain the TXOP for the associated zero-power device.

In some embodiments, the first parameter set includes at least one of: a contention window (CW) parameter, or a queue time.

That is, related parameters of the channel access of the first device are defined, for example, the CW parameter, or the queue time. The queue time is an IFS, and the IFS and a length of the CW determine the priority and the success probability of the access of the first device. For example, in the parameters used for the access of the first device, the queue time is a PIFS or DIFS, and the CW parameter is a configurable or predetermined value that is less than or equal to a value, for example, CW is equal to 0 or 1.

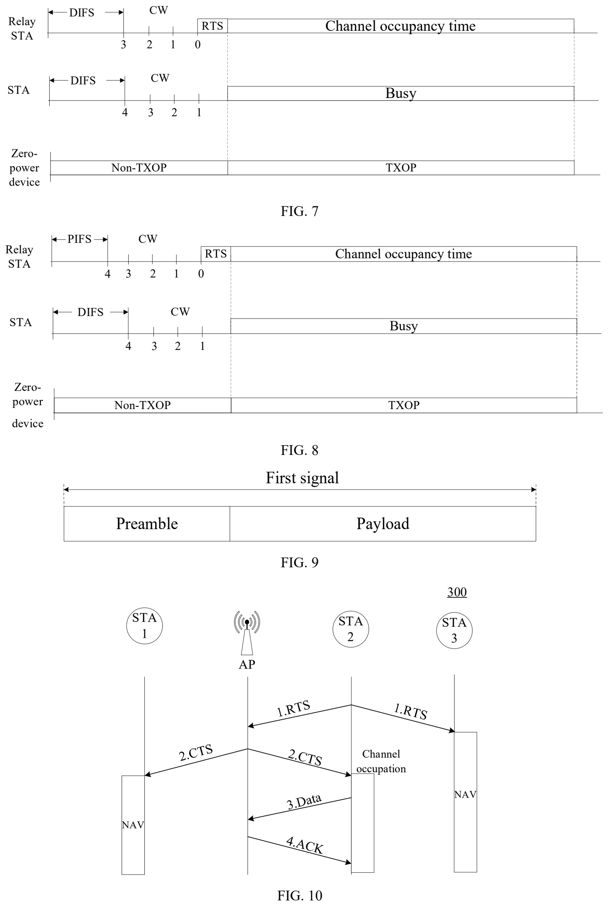

FIG. 7 is an exemplary diagram of a channel access process according to some embodiments of the present disclosure.

As illustrated in FIG. 7, the first device is also referred to as a relay STA, and contends with the STA for the channel. A queue time of the relay STA is the same as a queue time of the STA, that is, a DIFS. Due to different random backoff counter values set in the CW, the relay STA with a random backoff counter value of 3 is reduced to zero before the time of the backoff timer the STA, and thus the relay STA successfully gains the channel. The difference is caused by different sizes of the CWs set in the relay STA and other STAs, and a STA with a smaller CW has a greater probability of randomly selecting a smaller random backoff counter value.

FIG. 8 is an exemplary diagram of a channel access process according to some embodiments of the present disclosure.

As illustrated in FIG. 8, the first device is also referred to as a relay STA, and contends with the STA for the channel. A queue time of the relay STA is a PIFS, a queue time of the STA is a DIFS, and the queue time of the relay STA is less than the queue time of the STA. The relay STA starts the backoff timer before the STA. Although the random backoff values selected by the relay STA and the STA are the same (both 4), the relay STA has a shorter queue time and thus successfully gains the channel.

In some embodiments, the first device determines the first parameter set based on at least one of:
a type of the first time-domain resource, a type of the second device, a device group to which the second device belongs, a type of a PPDU frame of the second device, or a time at which the first device accesses the channel.

Illustratively, the first parameter set is determined based on the type of the first time-domain resource. In some embodiments, the type of the first time-domain resource includes at least one of: a time-domain resource separately used by the first device, a time-domain resource separately used by the second device, or a time-domain resource used by the first device and the second device.

For example, a parameter used by the first device in accessing the channel is associated with a type of the TXOP. For example, a parameter used by the first device in accessing the channel for the TXOP of the zero-power device is different from a parameter used by the first device in accessing the channel for transmission of the first device.

Illustratively, the first parameter set is determined based on the type of the second device. In some embodiments, the type of the second device is classified based on at least one of: a data priority, a data type, an access priority, an access probability, or a parameter for characterizing a requirement of real-time performance.

For example, a parameter used by the first device in accessing the channel for the zero-power device is associated with a type of the zero-power device. For example, for transmission of the zero-power device with a higher data transmission priority, a parameter used by the first device in accessing the channel ensures a higher access priority and a higher access probability. For example, the zero-power device with a higher data transmission priority is a sensor device used for hazard monitoring, a zero-power device with a stringent requirement for real-time performance of data transmission. Otherwise, a parameter used by the first device in accessing the channel does not ensure a higher access priority and a higher access probability. For example, the parameter is the same as a parameter used by the first device in accessing the channel for transmission of the first device as the STA.

For example, a parameter used by the first device in accessing the channel for the zero-power device is associated with a zero-power device group. Transmissions of different zero-power device groups correspond to parameters used by the first device in accessing different channels. The zero-power device group is identified by a device group identifier (ID).

Illustratively, the first parameter set is determined based on the type of the PPDU frame. In some embodiments, the type of the PPDU frame includes at least one of: a management frame, a control frame, or a data frame.

For example, a parameter used by the first device in accessing the channel for the zero-power device is associated with the type of the PPDU frame of the zero-power device. Different types correspond to parameters used by the first device in accessing different channels. The type of the PPDU frame includes a management frame, a control frame, a data frame, and the like. for example, the control frame has a higher priority, the data frame has a lower priority, and the first device corresponds to different frame types and uses different parameter for channel access. The type of the PPDU frame is identified by a type ID.

Illustratively, the first parameter set is determined based on the time at which the first device accesses the channel. In some embodiments, the time at which the first device accesses the channel includes at least one of a TWT for channel access of the first device, a RAW for channel access of the first device, or a duration in the RAW for channel access of the first device. In some embodiments, the TWT includes at least one of: individual TWT, broadcast TWT, or opportunistic power save (PS).

For power saving of the STA device, the following two windows are introduced in the present disclosure.

### 1. TWT

The AP and the STA negotiate a periodic TWT. In a case where the TWT arrives, the STA wakes up to receive a trigger frame from the AP, and perform a data exchange. Upon completion of the transmission, the STA returns to a sleep state.

The TWT includes three types, that is, the individual TWT, the broadcast TWT, and opportunistic PS. In the individual TWT, the STA negotiates a specific TWT with the AP. The specific TWT is stored in a schedule of the AP, and the STA wakes up in the specific TWT to receive the trigger frame from the AP and performs the data exchange. Each STA only knows the TWT negotiated with the AP and does not need to know TWTs of other STAs. The individual TWT has a plurality of operating modes, for example, an explicit mode and an implicit mode. The broadcast TWT is a mechanism managed by the AP. The STA only performs the broadcast TWT subsequent to requesting permission from the AP. The opportunistic PS does not involve a negotiation process between the AP and the node. The AP advertises a TWT, and any STA wakes up within the advertised TWT and performs the data frame exchange with the AP. The exchange is for a single node or uses the OFDMA mechanism.

### 2. RAW

Access within each RAW is permitted for only a subset of STAs. Each RAW may partitioned into one or more RAW slots. The STA contends for channel access only within its assigned RAW slot(s), while refraining from access during other RAW slots, thereby reducing channel access collisions.

In the embodiments, the transmission for the zero-power device may also configured (or scheduled) within a time window, for example, a TWT or a RAW. At the start of the TWT or the RAW, the first device needs to initiate a channel access procedure the channel, such that that the channel is available in the TWT or the RAW corresponding to the STA. The parameter used by the first device in accessing the channel for the zero-power device is associated with the time at which the channel is accessed. For example, the first device may use different channel access parameters for different times. The first device uses different channel access parameters for arrival of the three TWTs. As for the RAW, the first device uses different channel access parameters for different times or periodic RAWs. That is, in different RAWs, opportunities or probabilities that the zero-power device gains the channel reserved by the first device for transmission are different.

In some embodiments, the first device is in communication with the second device via the first physical layer air interface to perform at least one of:
transmitting a first signal to the second device, or receiving a second signal from the second device.

The first device is an AP device for the second device (for example, the zero-power device), and thus is also referred to as a zero-power (ZP) AP. The zero-power device belongs to a ZP BSS provided by the ZP AP device. The first device transmits the first signal to the zero-power device via the first physical layer air interface (for example, air interface 2 in FIG. 6) associated with the zero-power communication. The first device receives the second signal from the zero-power device via the first physical layer air interface (for example, air interface 2 in FIG. 6) associated with the zero-power communication. The first physical layer air interface is modulated in a simple modulation and demodulation mode (for example, ASK, FSK, and the like), and is encoded in a simple coding mode (for example, repetition coding, Manchester coding, block coding, packet coding, and the like).

In some embodiments, information carried in the first signal includes first information. The first information indicates that the first time-domain resource includes the second time-domain resource, or indicates the second time-domain resource in the first time-domain resource.

Illustratively, in a case where the first information indicates that the first time-domain resource includes the second time-domain resource, the second device determines the second time-domain resource based on a predetermined rule upon receiving the first signal. For example, in a case where the first information indicates that the first time-domain resource includes the second time-domain resource, the second device determines the second time-domain resource based on an ID of the second device. For example, the second device performs modulo calculation on the ID of the second device, and then determines, based on a calculation result, a time-domain resource at a position corresponding to the calculation result in the first time-domain resource as the second time-domain resource. For example, in a case where the first information indicates that the first time-domain resource includes the second time-domain resource, the second device determines a resource at a predefined position in the first time-domain resource as the second time-domain resource.

It should be noted that the specific implementation of the first information is not limited in the present disclosure.

For example, the first information includes at least one of:
TXOP information, indicating a duration and/or an end time of the TXOP (for example, the first time-domain resource or the second time-domain resource);
a device ID or a device group ID, indicating a zero-power device or a device group using the TXOP (for example, the first time-domain resource or the second time-domain resource);
an SP parameter, indicating an available duration or time window information of the zero-power device in the TXOP (for example, the first time-domain resource or the second time-domain resource), for example, an SP;
grant information, used to allocate a used TXOP or SP for the zero-power device; or
trigger information, used to start an SP.

Illustratively, in a case where the first information indicates the second time-domain resource, the second device directly determines the second time-domain resource based on the first information.

In some embodiments, the information carried in the first signal further includes at least one of: information indicating the first time-domain resource, an identifier of the first device, an identifier of the third device, an identifier of the second device, an identifier of a device group to which the second device belongs, or information transmitted from the third device to the second device.

Illustratively, the information carried in the first signal includes the information transmitted from the third device to the second device, which means that the first device is used to relay the information transmitted from the third device to the second device. That is, the first device reserves the channel for the second device, and further acts as a relay device between the third device and the second device to forward the information transmitted from the third device to the second device.

Specifically, the first device acts as the relay device between the third device and the second device. For example, the first device is relay device 2 in FIG. 6, the second device is STA 1 or STA 2 in FIG. 6, and the third device is the root AP in FIG. 6. The first device transmits the first signal to the zero-power device, and the information carried in the signal includes control information to control the zero-power device to transmit signals. For example, in a sensor network, the first device transmits sensor data report control information to control the zero-power device associated with the first device to transmit sensor information. Specifically, the control information in the first signal is associated with information carried in a signal from the root AP to the first device. For example, the root AP transmits the control information to the first device, and the first device transmits the corresponding control information to the zero-power device.

In some embodiments, the information carried in the first signal includes any one of information transmitted from the AP to the STA.

For example, the information transmitted from the AP to the STA includes, but is not limited to:
beacon information, including a parameter and/or configuration associated with the ZP BSS;
an BSS ID, a compressed SSID, or an STA ID, indicating ID information of the first device;
acknowledgment (ACK) information, used to respond to the transmission of the second device (for example, the zero-power device);
paging information, indicating that the first device has buffer data of the second device (for example, the zero-power device) that needs to be transmitted;
data, transmitted by the first device to the zero-power device;
synchronization information, for example, timing synchronization function (TSF) information, used for time synchronization of the second device (for example, the zero-power device); and
traffic indication map (TIM) information, indicating a second device (for example, the zero-power device) that has buffer data in the first device.

In some embodiments, the first signal is a power signal for powering the second device, the first signal is a carrier signal for backscattering by the second device, or the first signal includes a carrier signal for backscattering by the second device.

Illustratively, the first signal is the power signal for powering the second device and the carrier signal for backscattering by the second device; or, the first signal is the power signal for powering the second device and includes the carrier signal for backscattering by the second device.

Illustratively, the zero-power terminal performs the backscattering communication based on a received trigger signal.

Illustratively, the trigger signal is used to schedule or trigger the zero-power terminal to perform the backscattering communication. The trigger signal carries scheduling information of the network device, or the trigger signal is scheduling signaling or a scheduling signal transmitted by the network device.

It should be noted that the power signal and the trigger signal is a signal, or two separate signals, which is not limited in the present disclosure.

For example, in the cellular network, as the zero-power device does not have the battery for power supply, the network device is required to provide the power signal, such that the zero-power device acquires the energy to perform the corresponding communication process. The signal for providing the energy (that is, the power signal) and the signal for information transmission (that is, the trigger signal) are two separate signals or a signal. Similarly, in the RFID technology, the power signal and the trigger signal are a single signal. In the cellular passive IoT technology, the power signal and the trigger signal are two separate signals. The two signals are transmitted on the same frequency band. For example, the network device continuously or intermittently transmits the power signal on a frequency band, and the zero-power device harvests the energy. Upon acquisition of the energy, the zero-power device performs the corresponding communication process, for example, measurement, reception of channels/signals, and transmission of channels/signals.

FIG. 9 is an exemplary diagram of a first signal according to some embodiments of the present disclosure.

As illustrated in FIG. 9, the first signal includes a preamble and a payload. The preamble is used for the zero-power device to identify the first signal and synchronize with other devices, and the payload carries various pieces of information required to be carried in the first signal. The first signal further includes other contents, which are not limited in the present disclosure.

In some embodiments, the information carried in the second signal includes information transmitted from the second device to the third device.

Illustratively, the information carried in the second signal includes the information transmitted from the second device to the third device, which means that the first device is used to relay the information transmitted from the second device to the third device. That is, the first device reserves the channel for the second device, and further acts as a relay device between the third device and the second device to forward the information transmitted from the second device to the third device.

Specifically, the first device acts as the relay device between the third device and the second device. For example, the first device is relay device 2 in FIG. 6, the second device is STA 1 or STA 2 in FIG. 6, and the third device is the root AP in FIG. 6. The first device receives the second signal from the zero-power device. For example, in a sensor network, the first device receives sensor information transmitted from the zero-power device associated with the first device.

In some embodiments, the information carried in the second signal further includes at least one of: an identifier of the first device, an identifier of the third device, an identifier of the second device, or an identifier of a device group to which the second device belongs.

In some embodiments, the information carried in the second signal includes any one of information transmitted from the STA to the AP.

For example, the information transmitted from the STA to the AP includes, but is not limited to:
ACK information, used for transmission of the first device;
data, transmitted by the zero-power device to the first device;
trigger information, used to initiate startup of an SP of the zero-power device;
a grant ACK, an ACK of the grant; and
poll information, used to request transmission of the buffer data from the first device.

It should be noted that the second signal is transmitted to the first device and other devices that are in communication with the first device, for example, other zero-power devices or other relay devices. In this case, the first device is not a device in communication with the zero-power device, and is merely a device for gaining the TXOP for the zero-power device. In this case, the second signal carries address information of the receiver device to indicate the ID of the device receiving the second signal.

In some embodiments, the first device is in communication with the third device via the second physical layer air interface to perform at least one of:
transmitting a third signal to the third device, or receiving a fourth signal from the third device.

The first device is a STA device for the root AP. The first device belongs to a BSS provided by the root AP device. The first device transmits the third signal to the root AP or other STAs via the second physical layer air interface (for example, air interface 1 in FIG. 6) associated with the AP or STA communication. The first device receives the fourth signal from the root AP via the second physical layer air interface (for example, air interface 2 in FIG. 6) associated with the AP or STA communication. The second physical layer air interface is modulated in an OFDM modulation mode, and is encoded by FEC coding. Furthermore, the information carried in the third signal includes any type of information transmitted from the STA to the AP, for example, part of information carried in the first signal, information associated with the channel access result (for example, the RTS frame), and other types of NAV-setting frames from the first device. Information carried in the fourth signal includes any type of information transmitted from the AP to the STA, for example, information carried in the first signal and information related to the channel access result (for example, the CTS frame).

In some embodiments, information carried in the third signal includes information transmitted from the second device to the third device.

Illustratively, the information carried in the third signal includes the information transmitted from the second device to the third device, which means that the first device is used to relay the information transmitted from the second device to the third device. That is, the first device reserves the channel for the second device, and further acts as a relay device between the third device and the second device to forward the information transmitted from the second device to the third device.

Specifically, the first device acts as the relay device between the third device and the second device. For example, the first device is relay device 2 in FIG. 6, the second device is STA 1 or STA 2 in FIG. 6, and the third device is the root AP in FIG. 6. The first device transmits the third signal to the root AP upon receiving the second signal from the zero-power device, and the information carried in the third signal includes a zero-power device ID (or a device group ID) and information transmitted from the zero-power device to the root AP, for example, data or control information. The information is associated with information carried in the second signal receiving by the first device from the zero-power device. For example, in a sensor network, the zero-power device, as a sensor, transmits sensor information (carried in the second signal) to the first device, and the first device forwards the sensor information (carried in the third signal) to the root AP.

In some embodiments, the information carried in the third signal includes at least one of: an identifier of the first device, an identifier of the third device, an identifier of the second device, an identifier of a device group to which the second device belongs, or information indicating a channel occupancy time.

Illustratively, the information indicating the channel occupancy time is used by the receiver device of the third signal other than the third device to set the NAV. The information indicating the channel occupancy time is a frame carrying a First Channel occupancy time field reserved for the second device, and includes, but is not limited to, a data frame, a management frame, a control frame, and a frame associated with the channel access result. The frame associated with the channel access result is the RTS frame. The channel occupancy time includes a time reserved for the second device, and includes at least one of: a RAW, a duration or time window in a RAW, a TWT, a TXOP.

FIG. 10is an exemplary diagram of transmission of an RTS by a first device according to some embodiments of the present disclosure.

As illustrated in FIG. 10, STA 2 transmits an RTS frame prior to transmitting data to the AP. The RTS frame is received by the AP and STA 3. In a case where STA 3 is not a target receiver STA, STA 3 updates an NAV of STA 3 based on a Duration field of the RTS frame (for example, carrying information for indicating the channel occupancy time). Upon receiving the RTS, the AP replies with a CTS frame. In a case where STA 1 is not a target receiver STA, STA 1 updates an NAV of STA 3 based on a Duration field of the CTS frame. In this case, the NAV values of STA 1 and STA 3 ensure that channel idle monitoring starts only upon completion of ACK transmission between the AP and STA 2.

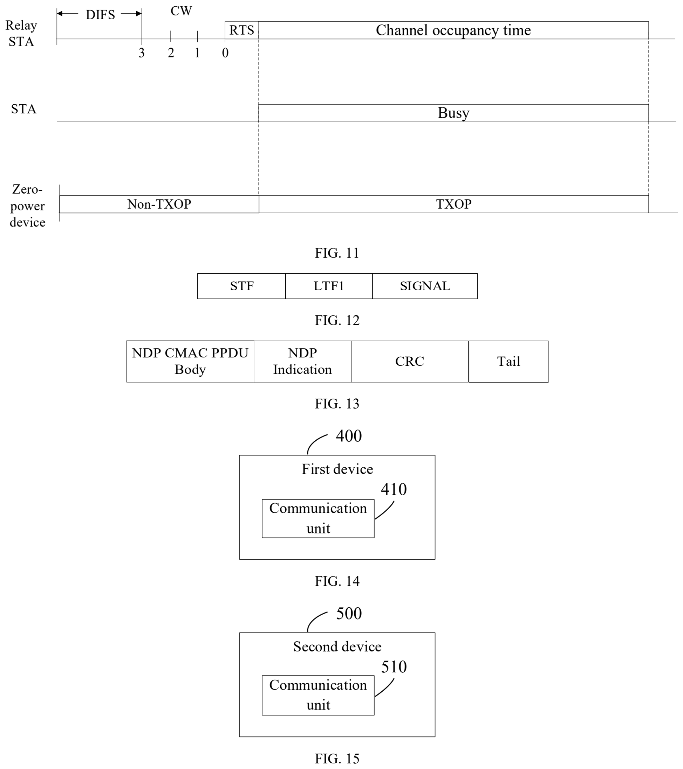

FIG. 11 is an exemplary diagram of transmission of an RTS by a first device according to some embodiments of the present disclosure.

As illustrated in FIG. 11, the first device is referred to as a relay STA, and contends for the channel with the STA. The relay STA successfully accesses the channel and transmits an RTS frame. The Duration field in the RTS frame indicates the channel occupancy time. Upon receiving the RTS frame, the STA updates the NAV of the STA. Before reduction of an NAV counter to zero, the channel is considered as busy, and the channel is not accessed. The channel occupancy time indicated by the RTS frame includes a TXOP time of the zero-power device.

The first device starts the channel access and gains channel reservation. The reserved channel is provided to the second device (for example, the zero-power device) for transmission. Therefore, subsequent successfully accessing the channel, the first device transmits an RTS frame, such that another device updates the NAV thereof based on the Duration field in the RTS frame. As the zero-power device may not transmit the CTS frame, and a plurality of zero-power devices use the channel, positions of the plurality of zero-power devices are different, and the problem of hidden nodes is difficult to solve. Thus, in the present disclosure, a transmission coverage of the RTS is enhanced, such that more devices receive the RTS to set the NAV and avoid the channel access collisions.

Illustratively, the third signal includes at least one RTS frame. A transmit power of the at least one RTS frame is greater than a transmit power of other information carried in the third signal; a transmission rate of the at least one RTS frame is less than a transmission rate of other information; or, in a case where the at least one RTS frame is a plurality of repetitive RTS frames, the receiver devices other than the third device of the plurality of RTS frames set NAVs thereof based on the first received RTS frame. That is, the first device transmits the RTS with a larger power or a lower data rate, or repetitively transmits the RTS. In the repetitively transmitted RTS, the later transmitted RTS does not affect setting of the NAV value for other devices based on the earlier transmitted RTS. That is, times at which the NAV timer of other devices return to zero based on the RTS are the same.

It should be noted that the information that indicates the channel occupancy time and is carried in the third signal may be the RTS frame, and may also be other types of frames from the STA, for example, a data frame, other types of management frames or control frames.

For example, the time set based on the Duration field in the data frame includes the transmission of the ACK frame plus one or three SIFSs, and further includes a channel usage time required for communication of the zero-power device.

For example, other types of management frames or control frames also include the Duration field, and includes, but is not limited to, a trigger frame, a quality of service (QoS) null frame, a QoS data frame, an ACK frame, a poll frame, a grant service period request frame, a sector sweep (SSW) feedback frame, an SSW-Ack frame, and the like. The frame transmitted from the STA may be used by the first device to reserve the channel occupancy time for the channel required for communication with the zero-power device.

FIG. 12 is an exemplary diagram of a NDP CMAC frame according to some embodiments of the present disclosure.

As illustrated in FIG. 12, the NDP CMAC frame only includes the preamble and the physical header, that is, does not include the data portion.

FIG. 13 is an exemplary diagram of a SIGNAL field in an NDP CMAC frame according to some embodiments of the present disclosure.

As illustrated in FIG. 13, the SIGNAL field includes: an NDP CMAC PPDU body, a NDP indication, a CRC, and a tail. The NDP CMAC PPDU body includes NDP CMAC PPDU type information and related control information. For example, in a case where the NDP CMAC PPDU type information indicates that the NDP is the CTS, control information carried in the NDP frame is CTS information, and the NDP frame is an NDP CTS frame. The NDP CMAC PPDU body includes the Duration field. The NDP frame transmitted from the STA includes the Duration field to reserve the channel occupancy time for the channel required for communication with the zero-power device.

That is, the frame including the Duration field is also referred to as an NAV-setting frame. The NAV is set by a third-party STA for transmission of the type of frames to reserve the channel occupancy time for the zero-power device and protect the transmission time of the communication of the zero-power device. The transmission time includes a RAW, a slot in the RAW, an interval corresponding to the TWT, a TXOP, and the like. The PPDU frame is a PPDU frame compatible with existing devices, and the receiver device of the PPDU frame is a root AP, a STA, or a relay device. Furthermore, in a case where the zero-power communication is supported on a new frequency band, corresponding frames that reserve the channel occupancy time for the zero-power device are defined, which is not limited in the present disclosure.

In some embodiments, information carried in the fourth signal includes information transmitted from the third device to the second device.

Illustratively, the information carried in the fourth signal includes the information transmitted from the third device to the second device, which means that the first device is used to relay the information transmitted from the third device to the second device. That is, the first device reserves the channel for the second device, and further acts as a relay device between the third device and the second device to forward the information transmitted from the third device to the second device.

Specifically, the first device acts as the relay device between the third device and the second device. For example, the first device is relay device 2 in FIG. 6, the second device is STA 1 or STA 2 in FIG. 6, and the third device is the root AP in FIG. 6. The first device receives control information (carried in the third signal) from the root AP to control the zero-power device to transmit the signal. For example, in a sensor network, the first device transmits sensor data report control information to control the zero-power device associated with the first device to transmit sensor information. The information carried in the third signal further includes a zero-power device ID (or a device group ID) and broadcast information transmitted from the root AP to the zero-power device.

In addition, for the associating process of the zero-power device and the first device, a capability report process associated with relay of the first device or a negotiating process of a relay mode and a parameter are added, which is not limited in the present disclosure.

In some embodiments, the information carried in the fourth signal includes at least one of: an identifier of the first device, an identifier of the third device, an identifier of the second device, an identifier of a device group to which the second device belongs, or information indicating a channel occupancy time.

The embodiments of the present disclosure are detailed in conjunction with the accompanying drawings. However, the present application is not limited to specific details of the embodiments. Various simple variations of the technical solutions made within the technical concept of the present disclosure fall within the scope of protection of the present disclosure. For example, various specific technical features in the specific embodiments may be combined in any suitable way without contradiction. The present disclosure does not further describe various possible combinations to avoid unnecessary repetition. For example, various different embodiments of the present disclosure may also be combined arbitrarily as long as they do not conflict with the idea of the present disclosure, and the combinations should also be regarded as the disclosed content of the present disclosure.

It should also be understood that in the various method embodiments of the present disclosure, the sequence numbers of the processes do not imply the execution order, and the execution order of various processes should be determined based on the function and internal logic and should not limit the embodiments of the present disclosure.

Method embodiments of the present disclosure are described in detail in conjunction with FIG. 1 to FIG. 13, and apparatus embodiments of the present disclosure are described in detail in conjunction with FIG. 14 to FIG. 19.

FIG. 14 is a schematic block diagram of a first device 400 according to some embodiments of the present disclosure.

As illustrated in FIG. 14, the first device 400 includes:
a communication unit 410, configured to acquire a first time-domain resource via channel access, wherein the first time-domain resource includes a second time-domain resource corresponding to a second device, wherein the second device is in communication with a third device via the first device.

In some embodiments, in a case where the second device is a device not having a channel access capability, the first time-domain resource includes the second time-domain resource.

In some embodiments, the device not having the channel access capability includes a zero-power device.

In some embodiments, in a case where the second device is associated with the first device, the first time-domain resource includes the second time-domain resource.

In some embodiments, the first device is associated with the third device.

In some embodiments, in a case where the second device is a sub-node device of the first device, the first time-domain resource includes the second time-domain resource.

In some embodiments, the sub-node device is at least one of: a device in a BSS provided by the first device, or a device associated with the first device.

In some embodiments, the first device includes a first physical layer air interface and a second physical layer air interface, wherein the first device is in communication with the second device via the first physical layer air interface, and the first device is in communication with the third device via the second physical layer air interface.

In some embodiments, the first device is in communication with the second device via the first physical layer air interface to perform at least one of: transmitting a first signal to the second device, or receiving a second signal from the second device.

In some embodiments, information carried in the first signal includes first information, wherein the first information indicates that the first time-domain resource includes the second time-domain resource, or indicates the second time-domain resource in the first time-domain resource.

In some embodiments, the information carried in the first signal further includes at least one of: information indicating the first time-domain resource, an identifier of the first device, an identifier of the third device, an identifier of the second device, an identifier of a device group to which the second device belongs, or information transmitted from the third device to the second device.

In some embodiments, the first signal is a power signal for powering the second device, the first signal is a carrier signal for backscattering by the second device, or the first signal includes a carrier signal for backscattering by the second device.

In some embodiments, information carried in the second signal includes information transmitted from the second device to the third device.

In some embodiments, the information carried in the second signal further includes at least one of: an identifier of the first device, an identifier of the third device, an identifier of the second device, or an identifier of a device group to which the second device belongs.

In some embodiments, the first device is in communication with the third device via the second physical layer air interface to perform at least one of: transmitting a third signal to the third device, or receiving a fourth signal from the third device.

In some embodiments, information carried in the third signal includes information transmitted from the second device to the third device.

In some embodiments, the information carried in the third signal further includes at least one of: an identifier of the first device, an identifier of the third device, an identifier of the second device, an identifier of a device group to which the second device belongs, or information indicating a channel occupancy time.

In some embodiments, information carried in the fourth signal includes information transmitted from the third device to the second device.

In some embodiments, the information carried in the fourth signal further includes at least one of: an identifier of the first device, an identifier of the third device, an identifier of the second device, an identifier of a device group to which the second device belongs, or information indicating a channel occupancy time.

In some embodiments, the communication unit 410 is further configured to: determine a first parameter set used in accessing the channel by the first device; and acquire the first time-domain resource via the channel access based on the first parameter set.

In some embodiments, the first parameter set includes at least one of: a CW parameter, or a queue time.

In some embodiments, the communication unit 410 is further configured to determine the first parameter set based on at least one of: a type of the first time-domain resource, a type of the second device, a device group to which the second device belongs, a type of a PPDU frame of the second device, or a time at which the first device accesses a channel.

In some embodiments, the first device is an access point device or a relay device.

In some embodiments, the second time-domain resource includes at least one of: a TXOP, a TWT, an SP, a RAW, or a duration in a RAW.

It should be understood that the apparatus embodiments correspond to the method embodiments, and for similar description, reference may be made to the method embodiments. Specifically, the first device 400 in FIG. 14 corresponds to the corresponding body in the method 200 or 300 of the embodiments of the present disclosure, and the above and other operations and/or functions of various units of the first device 400 implement corresponding processes of the methods according to the embodiments of the present disclosure, which are not elaborated herein for brevity.

FIG. 15 is a schematic block diagram of a second device 500 according to some embodiments of the present disclosure.

As illustrated in FIG. 15, the second device 500 includes: a communication unit 510, configured to communicate with a third device via a first device, wherein first time-domain resource acquired by the first device via channel access includes a second time-domain resource corresponding to the second device.

In some embodiments, in a case where the second device is a device not having a channel access capability, the first time-domain resource includes the second time-domain resource.

In some embodiments, the device not having the channel access capability includes a zero-power device.

In some embodiments, in a case where the second device is associated with the first device, the first time-domain resource includes the second time-domain resource.

In some embodiments, the first device is associated with the third device.

In some embodiments, in a case where the second device is a sub-node device of the first device, the first time-domain resource includes the second time-domain resource.

In some embodiments, the sub-node device is at least one of: a device in a BSS provided by the first device, or a device associated with the first device.

In some embodiments, the first device includes a first physical layer air interface and a second physical layer air interface, wherein the first device is in communication with the second device via the first physical layer air interface, and the first device is in communication with the third device via the second physical layer air interface.

In some embodiments, the communication unit 510 is further configured to: receive a first signal from the first device, or transmit a second signal to the first device.

In some embodiments, information carried in the first signal includes first information, wherein the first information indicates that the first time-domain resource includes the second time-domain resource, or indicates the second time-domain resource in the first time-domain resource.

In some embodiments, the information carried in the first signal further includes at least one of: information indicating the first time-domain resource, an identifier of the first device, an identifier of the third device, an identifier of the second device, an identifier of a device group to which the second device belongs, or information transmitted from the third device to the second device.

In some embodiments, the first signal is a power signal for powering the second device, the first signal is a carrier signal for backscattering by the second device, or the first signal includes a carrier signal for backscattering by the second device.

In some embodiments, information carried in the second signal includes information transmitted from the second device to the third device.

In some embodiments, the information carried in the second signal further includes at least one of: an identifier of the first device, an identifier of the third device, an identifier of the second device, or an identifier of a device group to which the second device belongs.

In some embodiments, the first device is an access point device or a relay device.

In some embodiments, the second time-domain resource includes at least one of: a TXOP, a TWT, an SP, a RAW, or a duration in a RAW.

It should be understood that the apparatus embodiments correspond to the method embodiments, and for similar description, reference may be made to the method embodiments. Specifically, the second device 500 in FIG. 15 corresponds to the corresponding body in the method 200 or 300 of the embodiments of the present disclosure, and the above and other operations and/or functions of various units of the second device 500 implement corresponding processes of the methods according to the embodiments of the present disclosure, which are not elaborated herein for brevity.

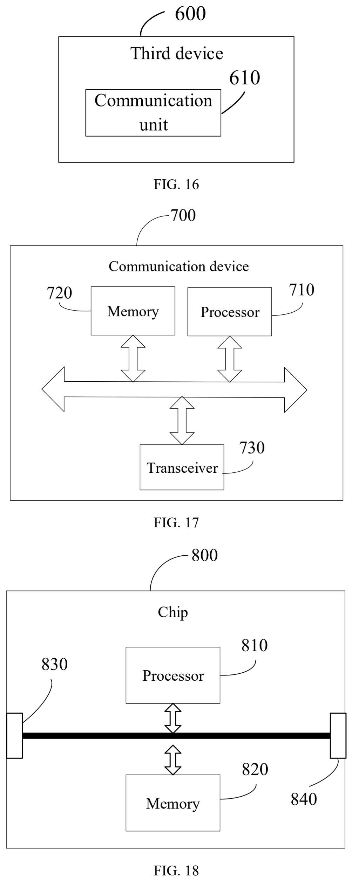

FIG. 16 is a schematic block diagram of a second device 600 according to some embodiments of the present disclosure.

As illustrated in FIG. 16, the second device 600 includes: a communication unit 610, configured to: communicate with a second device via a first device, wherein first time-domain resource acquired by the first device via channel access includes a second time-domain resource corresponding to the second device.

In some embodiments, in a case where the second device is a device not having a channel access capability, the first time-domain resource includes the second time-domain resource.

In some embodiments, the device not having the channel access capability includes a zero-power device.

In some embodiments, in a case where the second device is associated with the first device, the first time-domain resource includes the second time-domain resource.

In some embodiments, the first device is associated with the third device.

In some embodiments, in a case where the second device is a sub-node device of the first device, the first time-domain resource includes the second time-domain resource.

In some embodiments, the sub-node device is at least one of: a device in a BSS provided by the first device, or a device associated with the first device.

In some embodiments, the first device includes a first physical layer air interface and a second physical layer air interface, wherein the first device is in communication with the second device via the first physical layer air interface, and the first device is in communication with the third device via the second physical layer air interface.

In some embodiments, the communication unit 610 is further configured to: receive a third signal from the first device, or transmit a fourth signal to the first device.

In some embodiments, information carried in the third signal includes information transmitted from the second device to the third device.

In some embodiments, the information carried in the third signal further includes at least one of: an identifier of the first device, an identifier of the third device, an identifier of the second device, an identifier of a device group to which the second device belongs, or information indicating a channel occupancy time.

In some embodiments, information carried in the fourth signal includes information transmitted from the third device to the second device.

In some embodiments, the information carried in the fourth signal further includes at least one of: an identifier of the first device, an identifier of the third device, an identifier of the second device, an identifier of a device group to which the second device belongs, or information indicating a channel occupancy time.

In some embodiments, the first device is an access point device or a relay device.

In some embodiments, the second time-domain resource includes at least one of: a TXOP, a TWT, an SP, a RAW, or a duration in a RAW.

It should be understood that the apparatus embodiments correspond to the method embodiments, and for similar description, reference may be made to the method embodiments. Specifically, the third device 600 in FIG. 16 corresponds to the corresponding body in the method 200 or 300 of the embodiments of the present disclosure, and the above and other operations and/or functions of various units of the third device 600 implement corresponding processes of the methods according to the embodiments of the present disclosure, which are not elaborated herein for brevity.

The communication device according to the embodiments of the present disclosure is described in terms of functional modules in conjunction with the accompanying drawings. It should be understood that the functional modules are practiced in the form of hardware, software instructions, or a combination of hardware and software modules. Specifically, the processes of the method embodiments of the present disclosure are performed via the integrated logic circuits of hardware in the processor and/or software instructions. The processes of the method embodiments of the present disclosure are performed directly performed by the hardware decoding processor, or by the combination of hardware and software modules in the decoding processor. In some embodiments, the software module is disposed in a random-access memory (RAM), a flash memory, a read-only memory (ROM), a programmable read-only memory (PROM), an electrically erasable programmable memory, a register, and other storage media mature in the field. The storage medium is disposed in the memory, and the processor reads the information in the memory and combines with its hardware to perform the processes of the method.

For example, the communication unit is practiced as a transceiver.

FIG. 17 is a schematic structural diagram of a communication device 700 according to some embodiments of the present disclosure.

As illustrated in FIG. 17, the communication device 700 includes a processor 710.

The processor 710 is configured to call and run one or more computer programs in a memory to perform the methods according to the embodiments of the present disclosure.

As illustrated in FIG. 17, the communication device 700 further includes a memory 720.

The memory 720 is configured to store information and store codes and instructions executed by the processor 710. The processor 710 is configured to call and run one or more computer programs in the memory 720 to perform the methods according to the embodiments of the present disclosure. The memory 720 is a device independent of the processor 710, or is integrated in the processor 710.

As illustrated in FIG. 17, the communication device 700 further includes a transceiver 730.

The processor 710 may control communication of the transceiver 730 with other devices. In particular, the transceiver 730 transmits information or data to other devices, or receives information or data from other devices. The transceiver 730 includes a transiter and a receiver. The transceiver 730 further includes one or more antennas.

It should be understood that various assemblies of the communication device 700 are connected via a bus system. The bus system includes not only a data bus but also a power bus, a control bus, and a state signal bus. It should also be understood that the communication device 700 may be the first device, the second device, or the third device according to the embodiments of the present disclosure, and the communication device 700 performs the corresponding processes in the method according to the embodiments of the present disclosure that are performed by the first device, the second device, or the third device, which are not elaborated herein for brevity.

In addition, the embodiments of the present disclosure further provide a chip.

For example, the chip is an integrated circuit chip with a signal processing capability, and is configured to perform or implement various methods, processes, and logic block diagrams in the embodiments of the present disclosure. The chip is also referred to as a system-level chip, a system chip, a chip system, a system-on-chip, or the like. In some embodiments, the chip is applicable to various communication devices, such that the communication device equipped with the chip performs various methods, processes, and logic block diagrams in the embodiments of the present disclosure.

FIG. 18 is a schematic block diagram of a chip according to some embodiments of the present disclosure.

As illustrated in FIG. 18, the chip 800 includes a processor 810.

The processor 810 is configured to call and run one or more computer programs in a memory to perform the methods according to the embodiments of the present disclosure.

As illustrated in FIG. 18, the chip 800 further includes a memory 820.

The processor 810 is configured to call and run one or more computer programs in the memory 820 to perform the methods according to the embodiments of the present disclosure. The memory 820 is configured to store instruction information and codes or instructions executable by the processor 810. The memory 820 is a device independent of the processor 810, or is integrated in the processor 810.

As illustrated in FIG. 18, the chip 800 further includes an input interface 830.

The processor 810 controls the communication of the input interface 830 with other devices. In particular, the input interface 830 acquires information or data from other devices or chips.

As illustrated in FIG. 18, the chip 800 further includes an output interface 840.

The processor 810 controls the communication of the output interface 840 with other devices or chips. In particular, the output interface 840 transmits information or data to other devices or chips.

It should be understood that various assemblies of the chip 800 are connected via a bus system. The bus system includes not only a data bus but also a power bus, a control bus, and a state signal bus. It should also be understood that the chip 800 may be the first device, the second device, or the third device according to the embodiments of the present disclosure, and the chip performs the corresponding processes in the method according to the embodiments of the present disclosure that are performed by the first device, the second device, or the third device, which are not elaborated herein for brevity.

The processor herein includes, but is not limited to:
a general processor, a digital signal processor (DSP), an application-specific integrated circuit (ASIC), a field-programmable gate array (FPGA), any other programmable logic device, a discrete gate, a transistor logic device, a discrete hardware assembly, and the like.

The processor is capable of achieving or performing various methods, processes, and logic blocks according to the embodiments of the present disclosure. The process may be directly embodied as being processed by a hardware decoding processor or being performed by a combination of hardware and software modules in the decoding processor in conjunction with the processes of the methods according to the embodiments of the present disclosure. The software modules may be disposed in a RAM, a flash memory, a ROM, a PROM, an erasable programmable memory, a register, and other storage media mature in the field. The storage medium is disposed in the memory, and the processor reads the information in the memory and combines with its hardware to perform the processes of the method.

The memory herein includes, but is not limited to:
a volatile and/or non-volatile memory. The non-volatile memory may be a ROM, a PROM, an erasable PROM (EPROM), an electrically EPROM (EEPROM), or a flash memory. The volatile memory is a RAM used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM).

It should be noted that the memory described herein is intended to include, but not limit to these and any other suitable type of memories.

Some embodiments of the present disclosure further provide a computer-readable storage medium for storing one or more computer programs. The one or more programs include instructions. The instructions, when loaded and executed by a portable electronic device that contains a plurality of applications, cause the portable electronic device to perform the method for wireless communication according to the embodiments of the present disclosure. The computer-readable storage medium is applicable to the first device according to the embodiments of the present disclosure, and the computer programs cause the computer to perform the corresponding processes in the methods according to the embodiments of the present disclosure that are performed by the first device. The computer-readable storage medium is applicable to the second device according to the embodiments of the present disclosure, and the computer programs cause the computer to perform the corresponding processes in the methods according to the embodiments of the present disclosure that are performed by the second device. The computer-readable storage medium is applicable to the third device according to the embodiments of the present disclosure, and the computer programs cause the computer to perform the corresponding processes in the methods according to the embodiments of the present disclosure that are performed by the third device.

Some embodiments of the present disclosure further provide a computer program product including one or more computer program instructions. The computer program product is applicable to the first device according to the embodiments of the present disclosure, and the computer programs cause the computer to perform the corresponding processes in the methods according to the embodiments of the present disclosure that are performed by the first device. The computer program product is applicable to the second device according to the embodiments of the present disclosure, and the computer programs cause the computer to perform the corresponding processes in the methods according to the embodiments of the present disclosure that are performed by the second device. The computer program product is applicable to the third device according to the embodiments of the present disclosure, and the computer programs cause the computer to perform the corresponding processes in the methods according to the embodiments of the present disclosure that are performed by the third device.

Some embodiments of the present disclosure further provide a computer program. The computer program, when loaded and run by a computer, causes the computer to perform the method for wireless communication according to the embodiments of the present disclosure. The computer program is applicable to the first device according to the embodiments of the present disclosure, and, when loaded and run by a computer, causes the computer to perform the corresponding processes in the methods according to the embodiments of the present disclosure that are performed by the first device. The computer program is applicable to the second device according to the embodiments of the present disclosure, and, when loaded and run by a computer, causes the computer to perform the corresponding processes in the methods according to the embodiments of the present disclosure that are performed by the second device. The computer program is applicable to the third device according to the embodiments of the present disclosure, and, when loaded and run by a computer, causes the computer to perform the corresponding processes in the methods according to the embodiments of the present disclosure that are performed by the third device.

The present disclosure further provides a communication system. The communication system includes the first device, the second device, or the third device described above, which are not elaborated herein for brevity. It should be noted that the term "system" herein is also referred to as a "network management architecture," "network system," and the like.

It should be noted that the terms in the embodiments of the present disclosure and the appended claims are merely intended to describe specific embodiments and are not intended to limit the embodiments of the present disclosure. For example, the singular forms "a," "the," "above," and "that" in the embodiments of the present disclosure and the appended claims are also intended to include the plural forms, unless the context clearly indicates otherwise.

It is to be understood by those of ordinary skill in the art that the units and algorithmic processes of the examples described in conjunction with the embodiments disclosed herein can be practiced by the electronic hardware, or by a combination of the computer software and the electronic hardware. Whether these functions are achieved by the hardware or the software depends on the specific application and design constraints of the technical solution. For each application, those skilled in the art may use different methods to achieve the described functions, and such implementations should not be considered beyond the scope of the present disclosure. In a case where the functions are achieved in the form of software functional units and sold or used as stand-alone products, the functions may be stored in a computer-readable storage medium. Based on the understanding, the nature of the technical solutions of the present disclosure, the part contributed to the prior art, or the part of the technical solutions may be embodied in the form of a software product, and the software product is stored in a storage medium and includes a number of instructions to cause a computer device (which may be a personal computer, a server, a network equipment, or the like) to perform all or part of the processes of the method in various embodiments of the present disclosure. The storage medium includes a U disk, a mobile hard disk, a ROM, a RAM, a disk, a disc, or other media that can store program codes.

It is to be understood by those skilled in the art that for the specific operation processes of the system, device, and unit described above, reference may be made to the corresponding processes in the embodiments of the method for convenience and simplicity of description, which are not repeated herein for convenience and brevity. In the embodiments of the present disclosure, it should be understood that the systems, devices, and methods can be practiced in other ways. For example, the apparatus embodiments are only exemplary. For example, the division of the units is only the logical function division, and the actual implementation may have another division. For example, several units or assemblies can be combined or integrated into another system, or some features can be ignored or not performed. The units/modules/assemblies described as separate/display parts may or may not be physically separate. That is, the parts may be disposed in one place, or distributed in several network units. Some or all of the units/modules/assemblies can be selected according to actual needs to achieve the purpose of the technical solutions according to the embodiments. In addition, it should be noted that the coupling, the direct coupling, or the communication connection between each other may be achieved by some interfaces, and an indirect coupling or communication connection between devices or units may be electrical, mechanical or in other form.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

## Claims

1. A method for wireless communication, performed by a first device, the method comprising:
acquiring a first time-domain resource via channel access, wherein the first time-domain resource comprises a second time-domain resource corresponding to a second device, wherein the second device is in communication with a third device via the first device.

2. The method according to claim 1, wherein in a case where the second device is a device not having a channel access capability, the first time-domain resource comprises the second time-domain resource.

3. The method according to claim 2, wherein the device not having the channel access capability comprises a zero-power device.

4. The method according to any one of claims 1 to 3, wherein in a case where the second device is associated with the first device, the first time-domain resource comprises the second time-domain resource.

5. The method according to claim 4, wherein the first device is associated with the third device.

6. The method according to any one of claims 1 to 5, wherein in a case where the second device is a sub-node device of the first device, the first time-domain resource comprises the second time-domain resource.

7. The method according to claim 6, wherein the sub-node device is at least one of: a device in a basic service set (BSS) provided by the first device, or a device associated with the first device.

8. The method according to any one of claims 1 to 7, wherein the first device comprises a first physical layer air interface and a second physical layer air interface, wherein the first device is in communication with the second device via the first physical layer air interface, and the first device is in communication with the third device via the second physical layer air interface.

9. The method according to claim 8, wherein the first device is in communication with the second device via the first physical layer air interface to perform at least one of: transmitting a first signal to the second device, or receiving a second signal from the second device.

10. The method according to claim 9, wherein information carried in the first signal comprises first information, wherein the first information indicates that the first time-domain resource comprises the second time-domain resource, or indicates the second time-domain resource in the first time-domain resource.

11. The method according to claim 10, wherein the information carried in the first signal further comprises at least one of: information indicating the first time-domain resource, an identifier of the first device, an identifier of the third device, an identifier of the second device, an identifier of a device group to which the second device belongs, or information transmitted from the third device to the second device.

12. The method according to any one of claims 9 to 11, wherein the first signal is a power signal for powering the second device, the first signal is a carrier signal for backscattering by the second device, or the first signal comprises a carrier signal for backscattering by the second device.

13. The method according to claim 9, wherein information carried in the second signal comprises information transmitted from the second device to the third device.

14. The method according to claim 13, wherein the information carried in the second signal further comprises at least one of: an identifier of the first device, an identifier of the third device, an identifier of the second device, or an identifier of a device group to which the second device belongs.

15. The method according to any one of claims 8 to 14, wherein the first device is in communication with the third device via the second physical layer air interface to perform at least one of: transmitting a third signal to the third device, or receiving a fourth signal from the third device.

16. The method according to claim 15, wherein information carried in the third signal comprises information transmitted from the second device to the third device.

17. The method according to claim 16, wherein the information carried in the third signal further comprises at least one of: an identifier of the first device, an identifier of the third device, an identifier of the second device, an identifier of a device group to which the second device belongs, or information indicating a channel occupancy time.

18. The method according to claim 15, wherein information carried in the fourth signal comprises information transmitted from the third device to the second device.

19. The method according to claim 18, wherein the information carried in the fourth signal further comprises at least one of: an identifier of the first device, an identifier of the third device, an identifier of the second device, an identifier of a device group to which the second device belongs, or information indicating a channel occupancy time.

20. The method according to any one of claims 1 to 19, wherein acquiring the first time-domain resource via the channel access comprises:
determining a first parameter set used in accessing the channel by the first device; and
acquiring the first time-domain resource via the channel access based on the first parameter set.

21. The method according to claim 20, wherein the first parameter set comprises at least one of: a contention window (CW) parameter, or a queue time.

22. The method according to claim 20 or 21, wherein determining the first parameter set used in accessing the channel by the first device comprises:
determining the first parameter set based on at least one of: a type of the first time-domain resource, a type of the second device, a device group to which the second device belongs, a type of a physical layer protocol data unit (PPDU) frame of the second device, or a time at which the first device accesses a channel.

23. The method according to any one of claims 1 to 22, wherein the first device is an access point device or a relay device.

24. The method according to any one of claims 1 to 23, wherein the second time-domain resource comprises at least one of: a transmission opportunity (TXOP), a target wake time (TWT), a service period (SP), a restricted access window (RAW), or a duration in a RAW.

25. A method for wireless communication, performed by a second device, the method comprising:
communicating with a third device via a first device, wherein first time-domain resource acquired by the first device via channel access comprises a second time-domain resource corresponding to the second device.

26. The method according to claim 25, wherein in a case where the second device is a device not having a channel access capability, the first time-domain resource comprises the second time-domain resource.

27. The method according to claim 26, wherein the device not having the channel access capability comprises a zero-power device.

28. The method according to any one of claims 25 to 27, wherein in a case where the second device is associated with the first device, the first time-domain resource comprises the second time-domain resource.

29. The method according to claim 28, wherein the first device is associated with the third device.

30. The method according to any one of claims 25 to 29, wherein in a case where the second device is a sub-node device of the first device, the first time-domain resource comprises the second time-domain resource.

31. The method according to claim 30, wherein the sub-node device is at least one of: a device in a basic service set (BSS) provided by the first device, or a device associated with the first device.

32. The method according to any one of claims 25 to 31, wherein the first device comprises a first physical layer air interface and a second physical layer air interface, wherein the first device is in communication with the second device via the first physical layer air interface, and the first device is in communication with the third device via the second physical layer air interface.

33. The method according to any one of claims 25 to 32, wherein the first device is in communication with the third device to perform at least one of: receiving a first signal from the first device, or transmitting a second signal to the first device.

34. The method according to claim 33, wherein information carried in the first signal comprises first information, wherein the first information indicates that the first time-domain resource comprises the second time-domain resource, or indicates the second time-domain resource in the first time-domain resource.

35. The method according to claim 34, wherein the information carried in the first signal further comprises at least one of: information indicating the first time-domain resource, an identifier of the first device, an identifier of the third device, an identifier of the second device, an identifier of a device group to which the second device belongs, or information transmitted from the third device to the second device.

36. The method according to any one of claims 33 to 35, wherein the first signal is a power signal for powering the second device, the first signal is a carrier signal for backscattering by the second device, or the first signal comprises a carrier signal for backscattering by the second device.

37. The method according to claim 33, wherein information carried in the second signal comprises information transmitted from the second device to the third device.

38. The method according to claim 37, wherein the information carried in the second signal further comprises at least one of: an identifier of the first device, an identifier of the third device, an identifier of the second device, or an identifier of a device group to which the second device belongs.

39. The method according to any one of claims 25 to 38, wherein the first device is an access point device or a relay device.

40. The method according to any one of claims 25 to 39, wherein the second time-domain resource comprises at least one of: a transmission opportunity (TXOP), a target wake time (TWT), a service period (SP), a restricted access window (RAW), or a duration in a RAW.

41. A method for wireless communication, performed by a third device, the method comprising:
communicating with a second device via a first device, wherein first time-domain resource acquired by the first device via channel access comprises a second time-domain resource corresponding to the second device.

42. The method according to claim 41, wherein in a case where the second device is a device not having a channel access capability, the first time-domain resource comprises the second time-domain resource.

43. The method according to claim 42, wherein the device not having the channel access capability comprises a zero-power device.

44. The method according to any one of claims 41 to 43, wherein in a case where the second device is associated with the first device, the first time-domain resource comprises the second time-domain resource.

45. The method according to claim 44, wherein the first device is associated with the third device.

46. The method according to any one of claims 41 to 45, wherein in a case where the second device is a sub-node device of the first device, the first time-domain resource comprises the second time-domain resource.

47. The method according to claim 46, wherein the sub-node device is at least one of: a device in a basic service set (BSS) provided by the first device, or a device associated with the first device.

48. The method according to any one of claims 41 to 47, wherein the first device comprises a first physical layer air interface and a second physical layer air interface, wherein the first device is in communication with the second device via the first physical layer air interface, and the first device is in communication with the third device via the second physical layer air interface.

49. The method according to claim 48, wherein the first device is in communication with the second device via the first physical layer air interface to perform at least one of: receiving a third signal from the first device, or transmitting a fourth signal to the first device.

50. The method according to claim 49, wherein information carried in the third signal comprises information transmitted from the second device to the third device.

51. The method according to claim 50, wherein the information carried in the third signal further comprises at least one of: an identifier of the first device, an identifier of the third device, an identifier of the second device, an identifier of a device group to which the second device belongs, or information indicating a channel occupancy time.

52. The method according to claim 49, wherein information carried in the fourth signal comprises information transmitted from the third device to the second device.

53. The method according to any one of claim 52, wherein the information carried in the fourth signal further comprises at least one of: an identifier of the first device, an identifier of the third device, an identifier of the second device, an identifier of a device group to which the second device belongs, or information indicating a channel occupancy time.

54. The method according to any one of claims 41 to 53, wherein the first device is an access point device or a relay device.

55. The method according to any one of claims 41 to 54, wherein the second time-domain resource comprises at least one of: a transmission opportunity (TXOP), a target wake time (TWT), a service period (SP), a restricted access window (RAW), or a duration in a RAW.

56. A first device, comprising:
a communication unit, configured to acquire a first time-domain resource via channel access, wherein the first time-domain resource comprises a second time-domain resource corresponding to a second device, wherein the second device is in communication with a third device via the first device.

57. A second device, comprising:
a communication unit, configured to communicate with a third device via a first device, wherein first time-domain resource acquired by the first device via channel access comprises a second time-domain resource corresponding to the second device.

58. A third device, comprising:
a communication unit, configured to communicate with a second device via a first device, wherein first time-domain resource acquired by the first device via channel access comprises a second time-domain resource corresponding to the second device.

59. A first device, comprising: a transceiver, a processor, and a memory, wherein the memory is configured to store one or more computer programs, and the processor is configured to call and run the one or more computer programs in the memory to cause the transceiver to perform the method as defined in any one of claims 1 to 24.

60. A second device, comprising: a transceiver, a processor, and a memory, wherein the memory is configured to store one or more computer programs, and the processor is configured to call and run the one or more computer programs in the memory to cause the transceiver to perform the method as defined in any one of claims 25 to 40.

61. A third device, comprising: a transceiver, a processor, and a memory, wherein the memory is configured to store one or more computer programs, and the processor is configured to call and run the one or more computer programs in the memory to cause the transceiver to perform the method as defined in any one of claims 41 to 55.

62. A chip, comprising: a processor, wherein the processor is configured to call and run one or more computer programs in a memory to cause a device equipped with the chip to perform the method as defined in any one of claims 1 to 24, the method as defined in any one of claims 25 to 40, or the method as defined in any one of claims 41 to 55.

63. A computer-readable storage medium, storing: one or more computer programs, wherein the one or more computer programs, when loaded and run on a computer, cause the computer to perform the method as defined in any one of claims 1 to 24, the method as defined in any one of claims 25 to 40, or the method as defined in any one of claims 41 to 55.

64. A computer program product, comprising: one or more computer program instructions, wherein the one or more computer program instructions, when loaded and executed on a computer, cause the computer to perform as defined in any one of claims 1 to 24, the method as defined in any one of claims 25 to 40, or the method as defined in any one of claims 41 to 55.

65. A computer program, wherein the computer program, when loaded and run on a computer, causes the computer to perform the method as defined in any one of claims 1 to 24, the method as defined in any one of claims 25 to 40, or the method as defined in any one of claims 41 to 55.
